# EUROPÄISCHE PATENTSCHRIFT

(11) **EP 1 569 255 B1**
(45) Veröffentlichungstag und Bekanntmachung des Hinweises auf die Patenterteilung: **18.10.2006**
(21) Anmeldenummer: 04405116.7
(22) Anmeldetag: 27.02.2004
(51) Int. Cl.: H01H 31/00, H02B 13/00, H02B 13/035

(54) **Kompaktes Erderschaltgerät für gasisolierte Schaltanlagen**
Compact earthing switch for gas insulated substation
Interrupteur de mise à la terre compact pour Disjoncteurs à isolation par gas

(43) Veröffentlichungstag der Anmeldung: 31.08.2005
(73) Patentinhaber: ABB Technology AG, 8050 Zürich (CH)
(72) Erfinder: Moser, Hanspeter, 5442 Fislisbach (CH); Pavlovic, Bojan, 8049 Zürich (CH); Bleiker, Daniel, 8046 Zürich (CH); Holaus, Walter, 8037 Zürich (CH)
(74) Vertreter: ABB Patent Attorneys

(56) Entgegenhaltungen:
- EP-A- 1 361 633
- US-A- 3 553 397
- US-A- 5 828 025

## Beschreibung

### TECHNISCHES GEBIET

Die Erfindung bezieht sich auf das Gebiet der Hochspannungstechnik, insbesondere auf elektrische Isolations- und Anschlusstechnik für geerdete gasisolierte Schaltanlagen. Sie geht aus von einer dielektrischen Durchführung und einem elektrischen Hochspannungsapparate gemäss Oberbegriff der unabhängigen Patentansprüche.

### STAND DER TECHNIK

Erderschaltgeräte in bestehenden gasisolierten Schaltanlagen werden an speziellen Flanschen in den Schaltanlagen montiert. Diese Flansche sind entweder Standardflansche, welche bei jeder Verbindung benützt werden oder sogar kleinere Flansche, welche speziell für den Anbau von Erderschaltgeräten gemacht wurden. Die Flansche für den Erderanbau sind in der Regel zu klein, um bei der Montage durch diese hindurch die Aktivteile einzuführen oder zu befestigen. Zudem ist der Erderfestkontakt typischerweise in die Aktivteile im Innenrohr integriert. Bei den meisten heutigen Realisierungen von Erderschaltgeräten wird der bewegte Kontakt von aussen, d. h. von der Kapselung her, nach innen zu den Aktivteilen hin bewegt.

Die Erfindung nimmt auf einen Stand der Technik Bezug, wie er aus dem Artikel von M. Okabe et al., "Serialization of Standard Gas Insulated Switchgear", Hitachi Review Vol. 51 (2002), No. 5 bekannt ist. Dort ist ein herkömmlicher kombinierter Trenner/Erder-Schalter oder Dreistellungstrenner offenbart, bei dem ein verschiebliches Kontaktteil durch Linearbewegung zwischen den Positionen "Trenner eingeschaltet", d. h. Trennerkontakt geschlossen, "Trenner ausgeschaltet", d. h. Trennerkontakt geöffnet und "Erder eingeschaltet", d. h. Erderkontakt zusätzlich geschlossen, bewegbar ist. Der Erderfestkontakt ist wie bisher üblich auf einem flachen Deckel der gasisolierten Schaltanlage (GIS) an der Deckelinnenseite montiert und ragt im angeflanschten Zustand vom Deckel in den gasisolierten Schalterraum hinein. Dadurch beansprucht der Erder relativ viel Bauraum in der gasisolierten Schaltanlage. Der Erderfestkontakt ist elektrisch vom GIS-Gehäuse isoliert und kann über einen Kontaktbügel mit dem GIS-Gehäuse kurzgeschlossen werden.

Die EP 1 068 624 B1 offenbart ebenfalls einen kombinierten Trenner/Erder-Schalter. Hierbei ist der Erderfestkontakt als pinartiges Kontaktstück ausgebildet, das auf einem Kontaktträger aufsitzt, der seinerseits an einem durch die GIS-Gehäusewand nach aussen geführten Bolzen gehaltert ist.

Die EP 1 128 509 A1 offenbart auch einen kombinierten Trenner/Erder-Schalter. Der Erderfestkontakt ist in einem konisch zulaufenden Teil des GIS-Gehäuses integriert, wobei dieser GIS-Gehäuseteil von einem aufgeschraubten Deckel mit geringem Durchmesser verschlossen ist. Diese Konstruktion ist insofern aufwendig, als das GIS-Gehäuse zur Aufnahme des Erders speziell ausgebildet ist und insbesondere zur Schaffung eines die Erderschaltstrecke aufnehmenden Bauvolumens erderseitig deutlich verlängert ausgestaltet ist.

Die EP 1 361 633 A2 offenbart ebenso einen kombinierten Trenner/Erder-Schalter.

### DARSTELLUNG DER ERFINDUNG

Aufgabe der vorliegenden Erfindung ist es, für Erderschaltgeräte in gasisolierten Schaltanlagen eine verbesserte kompakte Bauweise anzugeben. Diese Aufgabe wird erfindungsgemäss durch die Merkmale der unabhängigen Ansprüche gelöst.

Die Erfindung ist in Anspruch 1 definiert. Der Montagedeckel stellt also ein Bauvolumen zur Verfügung und begrenzt oder umschliesst dieses. Auf diese Weise wird ein Montageflansch mit integriertem Erderfestkontakt realisiert, wobei der Erdefestkontakt sehr platzsparend im Bauvolumen des Montagedeckels angeordnet ist. Der Erderfestkontakt ist derart montiert, dass er mindestens teilweise im Bauvolumen sitzt. Da der Erderfestkontakt über einen Montagedeckel oder Montageflansch am Gehäuse der gasisolierten Schaltanlage befestigt ist, kann er sehr leicht montiert oder demontiert werden.

Gemäss der Erfindung ist der Erderfestkontakt vollständig im Bauvolumen des Montagedeckels oder Montageflansches angeordnet. Durch diese Anordnung des Erderfestkontakts am und im Montagedeckel kann der Platzbedarf des Erders markant verringert werden, sowohl im Vergleich zu bisherigen Anordnungen mit innenliegendem Erderantrieb als auch ganz besonders im Vergleich zu seitlich angebauten Erdern, deren Festkontakte in den Aktivteilen der gasisolierten Schaltanlage (GIS) angeordnet sind.

Das Ausführungsbeispiel gemäss Anspruch 2 hat den Vorteil, dass der Montagedeckel eine einfache Form hat und zugleich ein grosses Bauvolumen halbseitig umschliesst.

Das Ausführungsbeispiel gemäss Anspruch 3 hat den Vorteil, dass der Erderantrieb durch die bezüglich einer Längsachse des Schaltanlagenabschnitts endseitige Montage platzsparend in der gasisolierten Schaltanlage angeordnet ist.

Die Ausführungsbeispiele gemäss Anspruch 4 und 5 haben den Vorteil, dass der Montageflansch einen grossflächigen Zugang zum Innenraum der GIS-Anlage bietet, so dass Aktivteile durch den Montageflansch sehr einfach eingeführt, montiert, gewartet oder ausgetauscht werden können, ohne dass das Gehäuse entfernt werden muss. Da der Montageflansch grösser als ein Standardflansch und insbesondere gleich gross wie das GIS-Gehäuse ist, können auch grössere Aktivteile verwendet werden.

Anspruch 6 betrifft eine vorteilhafte Ausgestaltung des Erderantriebs, bei dem die Antriebswelle für den innenliegenden Vortrieb des beweglichen Erderkontakts vorzugsweise zentral durch den Montagedeckel geführt ist.

Anspruch 7 betrifft eine Ausführung des Erders als isolierter Erder, der besonders für genaue elektrische Messungen an geerdeten Aktivteilen der Schaltanlage von Vorteil ist.

Anspruch 8 gibt eine vorteilhafte Integration des kompakten Erders in einem kombinierten Trenner/Erder-Schaltgerät an.

Anspruch 9 betrifft eine elektrische Schaltanlage umfassend ein Erdschaltgerät wie zuvor beschrieben und mit den dort genannten Vorteilen.

Weitere Ausführungen, Vorteile und Anwendungen der Erfindung ergeben sich aus Anspruchskombinationen sowie aus der nun folgenden Beschreibung und den Figuren.

### KURZE BESCHREIBUNG DER ZEICHNUNGEN

- Fig. 1: zeigt schematisch im Querschnitt ein konventionelles Erderschaltgerät gemäss Stand der Technik, das seitlich an der gasisolierten Schaltanlage angebaut ist; und
- Fig. 2: zeigt schematisch im Querschnitt ein Ausführungsbeispiel eines erfindungsgemäss im Montagedeckel integrierten, kompakten Erderschaltgeräts.

In den Figuren sind gleiche Teile mit gleichen Bezugszeichen versehen.

### WEGE ZUR AUSFÜHRUNG DER ERFINDUNG

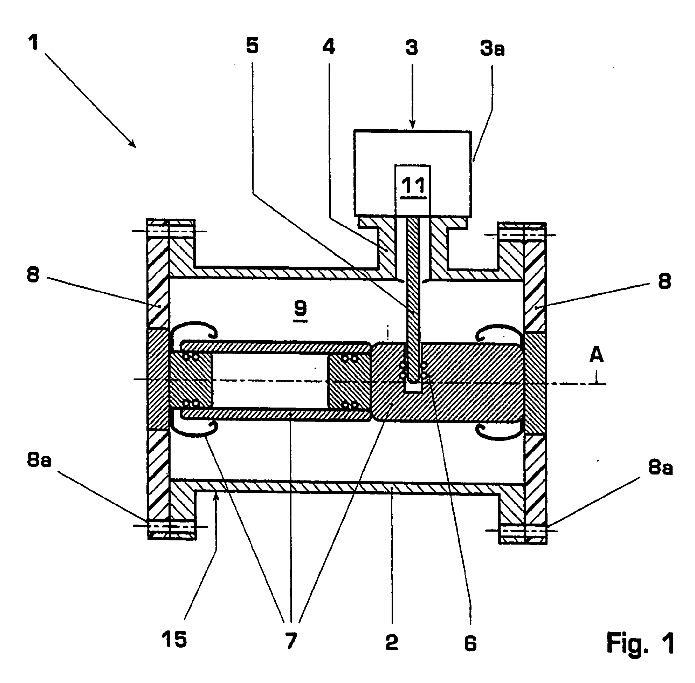

Fig. 1 zeigt ein herkömmliches Erderschaltgerät 1 in einer gekapselten gasisolierten Schaltanlage 15. Das Gehäuse 2 der gasisolierten Schaltanlage 15 umschliesst einen Gasraum 9, der bevorzugt mit SF₆-Gas unter einigen bar Druck gefüllt ist. Im Gasraum 9 befinden sich spannungs- und stromtragende Aktivteile 7 der Schaltanlage 15, die von Isolatoren 8 und gegebenenfalls einer Montagehalterung 7a getragen sind. Statt Halterung 7a kann auch eine optionale Stromverbindung 7a vorhanden sein. Bei den Isolatoren 8 kann es sich beispielsweise um Stützisolatoren 8 oder gasdichte Schottisolatoren 9 handeln, die über Flansche 8a am Gehäuse 2 befestigt sind.

Der Erderanbau 3 mit Erderantrieb 11 ist mitsamt seinem Erdergehäuse 3a über einen Flansch 4 seitlich an das GIS-Gehäuse 2 angeflanscht. Vom Antrieb 11 kann ein beweglicher Erderkontaktstift 5 in einen Erderfestkontakt 6 eingefahren werden, der in einem Aktivteil 7 der Schaltanlage 15 vorhanden ist. Im Normalbetrieb der Schaltanlage 15 ist der Stift 5 zurückgezogen und die Aktivteile 7 stehen unter Hochspannung und/oder tragen Betriebsstrom oder Kurzschlussstrom.

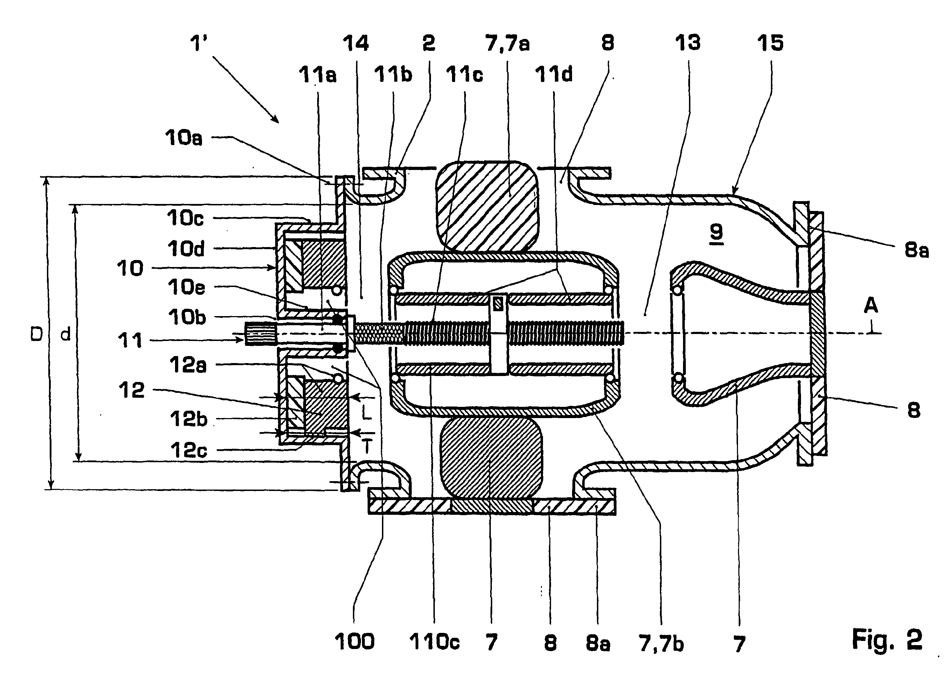

Fig. 2 zeigt einen erfindungsgemäss im Montagedeckel 10 integrierten Erder 1'. Dieser ist beispielhaft anhand eines kombinierten Trenner/Erder-Schaltgeräts 1' gezeigt. Wiederum sind ein Erderantrieb 11 (dargestellt ohne ausserhalb vorhandene Motorantriebseinheit), ein beweglicher Erderkontakt 110c und ein Erderfestkontakt 12 vorhanden. Der bewegliche Erderkontakt 110c und der Erderfestkontakt 12 sind in einem Gasraum 9 der gasisolierten Schaltanlage 15 angeordnet. Das Erderschaltgerät 1' ist im Bereich des Erderfestkontakts 12 mit dem Gehäuse 2 der gasisolierten Schaltanlage 15 mechanisch verbunden. Erfindungsgemäss weist der Montagedeckel 10 der gasisolierten Schaltanlage 15 ein konkav geformtes, den Gasraum 9 erweiterndes Bauvolumen 100 auf und ist der Erderfestkontakt 12 an einer Innenseite 10e des Montagedeckels 10 montiert und mindestens teilweise im Bauvolumen 100 des Montagedeckels 10 angeordnet. Im folgenden werden bevorzugte Ausführungsbeispiele angegeben.

Mit Vorteil weist der Erderfestkontakt 12, bezogen auf eine axiale Erstreckung senkrecht zum Montagedeckel 10, d. h. längs der Achse A des Schaltanlagenabschnitts 15, eine Baulänge L kleiner oder gleich einer Bautiefe T des Bauvolumens 100 auf. Wie dargestellt kann der Montagedeckel 10 im wesentlichen zylindrisch sein und ein im wesentlichen zylindrisches Bauvolumen 100 zur Aufnahme des Erderfestkontakts 12 aufweisen. In diesem Fall ist eine Deckelseitenwand 10c im wesentlichen als Zylindermantel 10c geformt, der sich entlang der Achse A und weg von den Aktivteilen 7 über die Bautiefe T erstreckt und endseitig durch einen im wesentlichen kreisrunden Deckelboden 10d abgeschlossen ist. Die Deckelinnenseite 10e stellt dann auch eine im wesentlichen kreisrunde oder wie dargestellt ringförmige, bevorzugt plane Montagefläche für den Erderfestkontakt 12 zur Verfügung.

Bevorzugt ist der Montagedeckel 10 mit dem integrierten Erderfestkontakt 12 endseitig am Gehäuse 2 der gasisolierten Schaltanlage 15 angeordnet. Dadurch wird eine sehr kompakte Bauweise für den kombinierten Trenner/Erder 1' erreicht und insbesondere eine kurze Baulänge entlang der Achse A. Die Trennstrecke 13 und die Erdungsstrecke 14 sind hier beispielhaft in Serie hintereinander angeordnet. Trotzdem werden kompakte Aussenmasse des Trenner/Erder-Schaltgeräts 1' erreicht.

Für einen grossflächigen Zugang zum Inneren des Trenner/Erder-Schaltgeräts 1' soll der Montagedeckel 10 grösser als ein Standardflansch der gasisolierten Schaltanlage 15 ausgelegt sein. Vorzugsweise weist der Montagedeckel 10 einen Öffnungsdurchmesser D auf, der im wesentlichen gleich einem Durchmesser d (hier beispielhaft dargestellt als Innendurchmesser d) der gasisolierten Schaltanlage 15 ist. Mit anderen Worten soll der Montageflansch 10 so gross gewählt sein, wie es die äusseren Abmessungen des Schaltanlagenabschnitts 15 oder des Schaltgeräts 1' zulassen. Dadurch können Aktivteile 7 der Schaltanlage 15 und auch Teile des Erder- oder Trenner/Erder-Schaltgeräts 1' einfach durch die Öffnung des Montagedeckels 10 eingebaut, ausgebaut oder gewartet werden.

In der dargestellten Ausführungsform weist der Montagedeckel 10 eine Ausnehmung 10b zur Durchführung des Erderantriebs 11, insbesondere einer Antriebswelle 11a und einer Isolierwelle 11b, für den beweglichen Erderkontakt 110c auf. Insbesondere umfasst der Erderantrieb 11 eine fliegende, durch die Welle 11a, 11b angetriebene Spindel 11b zum Linearantrieb des im Gasraum 9 angeordneten, rohrförmigen beweglichen Erderkontakts 110c. In dieser beispielhaften Konfiguration kann das bewegliche Kontaktstück 110c im Inneren 9 der Schaltanlage 15 in der Abschirmung 7b angeordnet sein und von innen nach aussen bewegt werden, so dass der Erderfestkontakt 12 am gehäuseseitig vorhandenen Montagedeckel 10 integrierbar ist.

Falls für den Erder 1' eine Ausführung mit isoliertem Erderfestkontakt 12 benötigt wird, sind auch die dafür notwendige elektrische Isolierung und die elektrischen Verbindungen im Montagedeckel 10 integriert. Hierfür weist der Erderfestkontakt 12 zwischen seinem Kontaktsystem 12a und dem Montagedeckel 10 eine elektrische Isolation 12b auf. Insbesondere weist der Erderfestkontakt 12 eine elektrisch isolierte Durchführung 12c durch das Gehäuse 2 nach aussen auf. Zum Kurzschliessen des Erders 1' mit dem Gehäuse 2 kann auf an sich bekannte Weise ein leitender Bügel (hier nicht dargestellt) zwischen dem durchgeführten Erdkontakt 12c und dem Gehäuse 2 montiert sein.

Das Erderschaltgerät 1' mit erfindungsgemäss im Montagedeckel 10 integriertem Erderfestkontakt 12 kann, wie gezeigt, Bestandteil eines kombinierten Trenner/Erder-Schaltgeräts 1' sein und insbesondere einen gemeinsamen Trenner/Erder-Antrieb 11 aufweisen. Das Erderschaltgerät 1' mit im Montagedeckel 10 integriertem Erderfestkontakt 12 kann auch in einem Winkeltrenner, in einer anderen Ausführungsvariante des kombinierten Trenner/Erders 1' oder separat, d. h. ohne Trennerfunktion, realisiert sein. Auch andere Erderantriebe 11 sind mit der Erfindung kompatibel und gelten hiermit als mitoffenbart.

Der Erderfestkontakt 12 kann vollständig im Montagedeckel 10 vormontiert sein. Er kann dann besonders einfach zusammen mit dem Montagedeckel 10 an das Gehäuse 2 des Schaltgeräts 1' angebaut, insbesondere über die Flansche 10a angeflanscht, werden. Insgesamt wird durch das im Montagedeckel 10 integrierte Schaltgerät 1' der Zusammenbau, die Revision und die Wartung der Schaltanlage 15 vereinfacht, da die Aktivteile 7 durch den Montageflansch 10 eingebaut, ausgebaut und ersetzt werden können, ohne dass das Gehäuse 2 entfernt werden muss.

Das Erderschaltgerät 1' ist besonders für gasisolierte Mittel- oder Hochspannungsschaltanlagen 15 geeignet. Beansprucht wird auch eine Schaltanlage 15 mit einem solchen Erderschaltgerät 1'.

### BEZUGSZEICHENLISTE

- 1: Herkömmlicher Erder (seitlich angebaut)
- 1': Kombinierter Trenner/Erder in Kompaktbauweise
- 2: GIS-Gehäuse
- 3: Erderanbau mit Erderantrieb
- 3a: Erdergehäuse
- 4: Flansch für Erderanbau
- 5: Beweglicher Erderkontaktstift
- 6: Erderfestkontakt
- 7: Aktivteile der Schaltanlage, Stromleiter (auf Hochspannungspotential)
- 7a: Halterung, optionale Stromverbindung
- 7b: Abschirmung für bewegliches Kontaktrohr
- 8: Isolator, Stützisolator, Schottisolator
- 8a: Isolatorflansch
- 9: Gasraum, SF₆
- 10: Montagedeckel, Montageflansch mit integriertem Erderfestkontakt
- 10a: Anflanschung für Montagedeckel
- 10b: Ausnehmung für Trenner/Erder-Antrieb, Antriebsdurchführung
- 10c: Deckelseitenwand, Zylindermantel
- 10d: Deckelboden, Zylinderboden
- 10e: Deckelinnenseite
- 100: Montagedeckelvolumen
- 11: Trenner/Erder-Antrieb
- 11a: Antriebswelle
- 11b: Isolierwelle
- 11c: Spindel
- 11d: Kontaktrohr, Schaltstange
- 110c: beweglicher Erderkontakt
- 12: Erderfestkontakt
- 12a: Kontaktsystem
- 12b: Isolation für isolierten Erder
- 12c: Erder/Gehäuse-Durchführung
- 13: Trennstrecke
- 14: Erdungsstrecke
- 15: gasisolierte Schaltanlage
- A: Achse des Schaltanlagenabschnitts
- d: Durchmesser des GIS-Gehäuses
- D: Durchmesser des Montagedeckels
- L: axiale Baulänge des Erderfestkontakts
- T: axiale Bautiefe des Bauvolumens

## Patentansprüche

1. Erderschaltgerät (1'), insbesondere für gasisolierte Hochspannungsschaltanlagen (15), umfassend einen Erderantrieb (11), einen beweglichen Erderkontakt (110c) und einen Erderfestkontakt (12), wobei der bewegliche Erderkontakt (110c) und der Erderfestkontakt (12) in einem Gasraum (9) der gasisolierten Schaltanlage (15) angeordnet sind, wobei ferner das Erderschaltgerät (1') im Bereich des Erderfestkontakts (12) mit dem Gehäuse (2) der gasisolierten Schaltanlage (15) mechanisch verbunden ist, **dadurch gekennzeichnet, dass**
a) ein Montagedeckel (10) der gasisolierten Schaltanlage (15) ein konkav geformtes, den Gasraum (9) erweiterndes Bauvolumen (100) aufweist und
b) der Erderfestkontakt (12) an einer Innenseite (10e) des Montagedeckels (10) montiert ist und im Bauvolumen (100) des Montagedeckels (10) angeordnet ist, wobei der Erderfestkontakt (12), bezogen auf eine axiale Erstreckung (A) senkrecht zum Montagedeckel (10), eine Baulänge (L) kleiner oder gleich einer Bautiefe (T) des Bauvolumens (100) aufweist.

2. Das Erderschaltgerät (1') nach einem der vorangehenden Ansprüche, **dadurch gekennzeichnet, dass** der Montagedeckel (10) im wesentlichen zylindrisch ist und ein im wesentlichen zylindrisches Bauvolumen (100) zur Aufnahme des Erderfestkontakts (12) aufweist.

3. Das Erderschaltgerät (1') nach einem der vorangehenden Ansprüche, **dadurch gekennzeichnet, dass** der Montagedeckel (10) mit dem integrierten Erderfestkontakt (12) endseitig am Gehäuse (2) der gasisolierten Schaltanlage (15) angeordnet ist.

4. Das Erderschaltgerät (1') nach einem der vorangehenden Ansprüche, **dadurch gekennzeichnet, dass** der Montagedeckel (10) grösser als ein Standardflansch der gasisolierten Schaltanlage (15) ist.

5. Das Erderschaltgerät (1') nach einem der vorangehenden Ansprüche, **dadurch gekennzeichnet, dass** der Montagedeckel (10) einen Öffnungsdurchmesser (D) aufweist, der im wesentlichen gleich einem Durchmesser (d) der gasisolierten Schaltanlage (15) ist.

6. Das Erderschaltgerät (1') nach einem der vorangehenden Ansprüche, **dadurch gekennzeichnet, dass**
a) der Montagedeckel (10) eine Ausnehmung (10b) zur Durchführung des Erderantriebs (11), insbesondere einer Antriebswelle (11a) und einer Isolierwelle (11b), für den beweglichen Erderkontakt (110c) aufweist und
b) insbesondere dass der Erderantrieb (11) eine fliegende Spindel (11b) zum Linearantrieb des im Gasraum (9) angeordneten, rohrförmigen beweglichen Erderkontakts (110c) umfasst.

7. Das Erderschaltgerät (1') nach einem der vorangehenden Ansprüche, **dadurch gekennzeichnet, dass**
a) der Erderfestkontakt (12) zwischen seinem Kontaktsystem (12a) und dem Montagedeckel (10) eine elektrische Isolation (12b) aufweist und
b) insbesondere dass der Erderfestkontakt (12) eine elektrisch isolierte Durchführung (12c) durch das Gehäuse (2) nach aussen aufweist.

8. Das Erderschaltgerät (1') nach einem der vorangehenden Ansprüche, **dadurch gekennzeichnet, dass** das Erderschaltgerät (1') Bestandteil eines kombinierten Trenner/Erder-Schaltgeräts (1') ist und insbesondere einen gemeinsamen Trenner/Erder-Antrieb (11) aufweist.

9. Elektrische Schaltanlage (15), insbesondere Hoch- oder Mittelspannungsschaltanlage (15), **gekennzeichnet durch** ein Erderschaltgerät (1') gemäss einem der vorangehenden Ansprüche.

## Claims

1. Earthing switching device (1'), in particular for gas-insulated high-voltage switchgear assemblies (15), comprising an earthing device drive (11), a movable earthing device contact (110c) and an earthing device fixed contact (12), the movable earthing device contact (110c) and the earthing device fixed contact (12) being arranged in a gas chamber (9) of the gas-insulated switchgear assembly (15), in addition the earthing switching device (1') being mechanically connected to the housing (2) of the gas-insulated switchgear assembly (15) in the region of the earthing device fixed contact (12), **characterized in that**
a) a mounting lid (10) of the gas-insulated switchgear assembly (15) has a concave physical volume (100) which extends the gas chamber (9), and
b) the earthing device fixed contact (12) is mounted on an inner side (10e) of the mounting lid (10) and is arranged in the physical volume (100) of the mounting lid (10, the earthing device fixed contact (12), based on an axial extent (A) perpendicular to the mounting lid (10), having a physical length (L) which is smaller than or equal to a physical depth (T) of the physical volume (100).

2. Earthing switching device (1') according to Claim 1, **characterized in that** the mounting lid (10) is essentially cylindrical and has an essentially cylindrical physical volume (100) for the purpose of accommodating the earthing device fixed contact (12).

3. Earthing switching device (1') according to one of the preceding claims, **characterized in that** the mounting lid (10) with the integrated earthing device fixed contact (12) is arranged at one end on the housing (2) of the gas-insulated switchgear assembly (15).

4. Earthing switching device (1') according to one of the preceding claims, **characterized in that** the mounting lid (10) is larger than a standard flange of the gas-insulated switchgear assembly (15).

5. Earthing switching device (1') according to one of the preceding claims, **characterized in that** the mounting lid (10) has an opening diameter (D), which is essentially the same as a diameter (d) of the gas-insulated switchgear assembly (15).

6. Earthing switching device (1') according to one of the preceding claims, **characterized in that**
a) the mounting lid (10) has a cutout (10b) for the purpose of passing through the earthing device drive (11), in particular a drive shaft (11a) and an insulating shaft (11b), for the movable earthing device contact (110c), and
b) in particular, the earthing device drive (11) comprises a movable spindle (11b) for the linear drive of the tubular, movable earthing device contact (110c) arranged in the gas chamber (9).

7. Earthing switching device (1') according to one of the preceding claims, **characterized in that**
a) the earthing device fixed contact (12) has electrical insulation (12b) between its contact system (12a) and the mounting lid (10), and
b) in particular, the earthing device fixed contact (12) has an electrically insulated bushing (12c) through the housing (2) to the outside.

8. Earthing switching device (1') according to one of the preceding claims, **characterized in that** the earthing switching device (1') is part of a combined disconnector/earthing switching device (1') and has, in particular, a common disconnector/earthing device drive (11).

9. Electrical switchgear assembly (15), in particular a high-voltage or medium-voltage switchgear assembly (15), **characterized by** an earthing switching device (1') according to one of the preceding claims.

## Revendications

1. Interrupteur de mise à la terre (1'), notamment pour des équipements de commutation haute tension à isolement gazeux (15), comprenant un mécanisme d'entraînement de mise à la terre (11), un contact mobile de mise à la terre (110c) et un contact fixe de mise à la terre (12), le contact mobile de mise à la terre (110c) et le contact fixe de mise à la terre (12) étant disposés dans un espace de gaz (9) de l'équipement de commutation à isolement gazeux (15), l'interrupteur de mise à la terre (1') étant en outre relié mécaniquement avec le boîtier (2) de l'équipement de commutation à isolement gazeux (15) dans la zone du contact fixe de mise à la terre (12), **caractérisé en ce que**
a) un couvercle de montage (10) de l'équipement de commutation à isolement gazeux (15) présente un volume hors tout (100) de forme concave qui étend l'espace de gaz (9) et
b) le contact fixe de mise à la terre (12) est monté sur un côté intérieur (10e) du couvercle de montage (10) et il est disposé dans le volume hors tout (100) du couvercle de montage (10), le contact fixe de mise à la terre (12) présentant, perpendiculairement au couvercle de montage (10) par rapport à une extension axiale (A), une longueur hors tout (L) inférieure ou égale à une profondeur hors tout (T) du volume hors tout (100).

2. Interrupteur de mise à la terre (1') selon la revendication 1, **caractérisé en ce que** le couvercle de montage (10) est essentiellement cylindrique et présente un volume hors tout (100) essentiellement cylindrique pour accueillir le contact fixe de mise à la terre (12).

3. Interrupteur de mise à la terre (1') selon l'une des revendications précédentes, **caractérisé en ce que** le couvercle de montage (10) muni du contact fixe de mise à la terre (12) est disposé d'un côté sur le boîtier (2) de l'équipement de commutation à isolement gazeux (15).

4. Interrupteur de mise à la terre (1') selon l'une des revendications précédentes, **caractérisé en ce que** le couvercle de montage (10) est plus grand qu'une bride standard de l'équipement de commutation à isolement gazeux (15).

5. Interrupteur de mise à la terre (1') selon l'une des revendications précédentes, **caractérisé en ce que** le couvercle de montage (10) présente un diamètre d'ouverture (D) qui est pour l'essentiel égal à un diamètre (d) de l'équipement de commutation à isolement gazeux (15).

6. Interrupteur de mise à la terre (1') selon l'une des revendications précédentes, **caractérisé en ce que**
a) le couvercle de montage (10) présente un creux (10b) pour faire passer le mécanisme d'entraînement de mise à la terre (11), notamment un arbre d'entraînement (11a) et un arbre d'isolation (11b), pour le contact de mise à la terre mobile (110c) et
b) notamment que le mécanisme d'entraînement de mise à la terre (11) comprend une broche mobile (11b) pour l'entraînement linéaire du contact de mise à la terre mobile (110c) de forme tubulaire disposé dans l'espace de gaz (9).

7. Interrupteur de mise à la terre (1') selon l'une des revendications précédentes, **caractérisé en ce que**
a) le contact fixe de mise à la terre (12) présente entre son système de contact (12a) et le couvercle de montage (10) une isolation électrique (12b) et
b) notamment que le contact fixe de mise à la terre (12) présente une traversée électriquement isolée (12c) à travers le boîtier (2) vers l'extérieur.

8. Interrupteur de mise à la terre (1') selon l'une des revendications précédentes, **caractérisé en ce que** l'interrupteur de mise à la terre (1') fait partie d'un commutateur combiné sectionneur/de mise à la terre (1') et présente notamment un mécanisme d'entraînement commun du sectionneur/élément de mise à la terre (1').

9. Équipement de commutation électrique (15), notamment équipement de commutation à haute ou à moyenne tension (15), **caractérisé par** un interrupteur de mise à la terre (1') selon l'une des revendications précédentes.
